# EUROPÄISCHE PATENTSCHRIFT

(11) **EP 2 707 262 B1**
(45) Veröffentlichungstag und Bekanntmachung des Hinweises auf die Patenterteilung: **29.06.2016**
(21) Anmeldenummer: 12710140.0
(22) Anmeldetag: 13.03.2012
(51) Int. Cl.: B60T 8/44, B60T 8/42, B60T 13/74

(54) **HYDRAULISCHE FAHRZEUG-BREMSANLAGE MIT ELEKTROMECHANISCHEM AKTUATOR UND VERFAHREN ZUM BETREIBEN EINER DERARTIGEN HYDRAULISCHEN FAHRZEUG-BREMSANLAGE**
HYDRAULIC VEHICLE BRAKING SYSTEM WITH ELECTROMECHANICAL ACTUATOR, AND METHOD FOR OPERATING SUCH A HYDRAULIC VEHICLE BRAKING SYSTEM
SYSTÈME DE FREINAGE HYDRAULIQUE DE VÉHICULE COMPRENANT UN ACTIONNEUR ÉLECTROMÉCANIQUE ET PROCÉDÉ PERMETTANT DE FAIRE FONCTIONNER UN TEL SYSTÈME DE FREINAGE HYDRAULIQUE DE VÉHICULE

(30) Priorität: 10.05.2011 DE 102011101066
(43) Veröffentlichungstag der Anmeldung: 19.03.2014
(73) Patentinhaber: Lucas Automotive GmbH, 56070 Koblenz (DE)
(72) Erfinder: GILLES, Leo, 56077 Koblenz (DE)
(74) Vertreter: Röthinger, Rainer
(86) Internationale Anmeldenummer: PCT/EP2012/001119
(87) Internationale Veröffentlichungsnummer: WO 2012/152352

(56) Entgegenhaltungen:
- EP-A1- 1 634 787
- EP-A1- 2 103 493
- EP-A2- 1 738 983
- EP-A2- 2 019 010
- WO-A1-2004/110840
- WO-A1-2008/122469
- WO-A2-2009/083216
- DE-A1- 10 338 046
- FR-A1- 2 874 880
- JP-A- 2007 131 130
- JP-A- 2008 254 586

## Beschreibung

### Technisches Gebiet

Die vorliegende Offenbarung betrifft allgemein das Gebiet der Fahrzeug-Bremsanlagen. Genauer gesagt wird eine hydraulische Fahrzeug-Bremsanlage beschrieben, die mit einem elektromechanischen Aktuator ausgerüstet ist.

### Hintergrund

Elektromechanische Aktuatoren finden bereits seit geraumer Zeit in Fahrzeug-Bremsanlagen Verwendung oder wurden für eine solche Verwendung vorgeschlagen. Bei hydraulischen Bremsanlagen gelangen elektromechanische Aktuatoren beispielsweise zur Realisierung einer elektrischen Parkbremsfunktion (EPB) zum Einsatz. Bei elektromechanischen Bremsanlagen (EMB) ersetzen sie die herkömmlichen Hydraulikzylinder an den Radbremsen.

Aufgrund technischer Fortschritte hat sich die Leistungsfähigkeit der elektromechanischen Aktuatoren fortlaufend erhöht. Es wurde daher in Erwägung gezogen, derartige Aktuatoren auch zur Implementierung moderner Bremsregelfunktionen heranzuziehen. Zu solchen Bremsregelfunktionen zählen ein Antiblockiersystem (ABS), eine Antriebsschlupfregelung (ASR) oder ein elektronischen Stabilitätsprogramm (ESP), auch als Fahrzeugstabilitätsregelung (Vehicle Stability Control, VSC) bezeichnet. So lehrt die WO 2006/111393 A1 eine hydraulische Bremsanlage mit einem hochdynamischen elektromechanischen Aktuator, der die Druckmodulation im Bremsregelbetrieb übernimmt. Der Aktuator ist dazu vorgesehen, einen Hauptzylinder der Bremsanlage zu betätigen.

Aufgrund der hohen Dynamik des elektromechanschen Aktuators lassen sich die hydraulischen Komponenten der aus der WO 2006/111393 A1 bekannten Bremsanlage auf ein einziges 2/2-Wege-Ventil pro Radbremse reduzieren. Zur Realisierung radindividueller Druckmodulationen werden die Ventile dann einzeln oder gruppenweise im Multiplex-Betrieb angesteuert.

Aus der Minimierung auf lediglich ein Ventil pro Radbremse resultieren jedoch auch Probleme, wie ein ungewollter Druckausgleich bei gleichzeitig geöffneten Ventilen, die auf aufwändige Weise wieder gelöst werden müssen (vgl. WO 2010/091883 A1). Nachteilig ist ferner, dass der Multiplexbetrieb einen elektromechanischen Aktuator erfordert, dessen Dynamikbereich gegenüber herkömmlichen elektromechanischen Aktuatoren um wenigstens einen Faktor in der Größenordnung von 4 höher sein muss.

Aus EP 2 019 010 A2 und JP 2008-254586 A ist eine hydraulische Bremsanlage mit einem elektromechanischen Aktuator zur Bremskraftverstärkung bekannt. Die Bremsanlage umfasst ferner eine hydraulische Steuereinheit mit Pumpe zur fahrerunabhängigen Bremsdruckregelung an den Radbremsen.

EP 2 103 493 A1 lehrt ein Stabilitätsprogramm für ein Kraftfahrzeug, welches mit Hilfe eines Hauptbremszylinders, ein mit dem Hauptbremszylinder zusammenwirkenden elektromechanischen Aktuator zum fahrerunabhängigen Druckaufbau sowie mit Hilfe von in den Bremskreisen angeordneten Einlassventilen und Auslassventilen realisiert ist. Druckaufbau und Druckabbau an den Radbremsen erfolgt durch geeignete Ansteuerung der Einlassventile und Auslassventile sowie durch Betätigung des elektromechanischen Aktuators.

WO 2008/122469 A1 lehrt ein Bremssystem mit einem elektromechanischem Bremskraftverstärker und einem Hauptbremszylinder. In einem Brake-By-Wire-Betrieb wird der elektromechanische Bremskraftverstärker zum Aufbau eines Bremsdrucks im Hauptbremszylinder eingesetzt. Die Drucksteuerung an den Radbremsen erfolgt über den Radbremsen zugeordneten Einlass- und Auslassventilen.

Das nach dem Anmeldetag der vorliegenden Anmeldung veröffentlichte

Dokument WO 2012/062393 A1 offenbart eine Bremsanlage mit einer Zylinder-Kolben-Einrichtung, einen Tandem-Hauptzylinder, dessen Primärkolben mit dem Kolben der Zylinder-Kolben-Einrichtung mechanisch koppelbar ist, und einen elektromechanischen Aktuator zur fahrerunabhängigen Betätigung der Kolben des Hauptbremszylinders. Die Bremsanlage umfasst ferner zwei mit dem Hauptbremszylinder fluidisch gekoppelte Bremskreise sowie zwei weitere Hydraulikleitungen, über die Hyraulikfluid von den mit den Bremskreisen gekoppelten Radbremsen in einen Vorratsbehälter abfließen kann. Innerhalb der Bremskreise sind ferner Einlassventile und Auslassventile angeordnet, um den Druckaufbau an den Radbremsen entsprechend Regeln zu können. Ferner sind zusätzliche Magnetventile in der Bremsanlage vorgesehen, um bei geschlossenen Einlassventilen ein Hydraulikflüssigkeitsvolumenausgleich in dem Hauptbremszylinder zu ermöglichen. Ferner kann mittels dieser Ventile eine hydraulische Leerwegfreischaltung realisiert werden.

### Kurzer Abriss

Es ist daher eine hydraulische Fahrzeug-Bremsanlage mit einem elektromechanischen Aktuator bereitzustellen, welche einen oder mehrere der mit dem Multiplex-Betrieb einhergehenden Nachteile vermeidet.

Gemäß einem ersten Aspekt wird eine hydraulische Fahrzeug-Bremsanlage angegeben, die Folgendes umfasst: einen Hauptzylinder mit wenigstens einem darin verschieblich aufgenommenen Kolben; einen mit einem Bremspedal gekoppelten oder koppelbaren mechanischen Aktuator zur Betätigung des Kolbens; einen elektromechanischen Aktuator zur Betätigung des Kolbens, wobei der elektromechanische Aktuator zumindest zur Bremskraftverstärkung oder Bremskrafterzeugung bei einer Betätigung des Bremspedals ansteuerbar ist; eine erste Ventilanordnung, die pro Radbremse ein erstes Ventil zum selektiven Abkoppeln der Radbremse vom Hauptzylinder und ein zweites Ventil zum selektiven Bremsdruckabbau an der Radbremse besitzt, wobei die erste Ventilanordnung zumindest im Rahmen eines ABS-Regelbetriebs ansteuerbar ist; und eine zur ersten Ventilanordnung zusätzliche Ventilanordnung, die einen Abbau von Hydraulikdruck bei Ausfall des elektromechanischen Aktuators ermöglicht, wobei die hydraulische Fahrzeug-Bremsanlage dazu ausgebildet ist, bei einem Ausfall des elektromechanischem Aktuators und bei geöffnetem ersten Ventil die zugehörige Radbremse mittels der zusätzlichen Ventilanordnung zum Hydraulikdruckabbau selektiv mit einem drucklosen Hydraulikfluidreservoir zu koppeln.

Gemäß einer ersten Variante ist der elektromechanische Aktuator zur Betätigung des Hauptzylinder-Kolbens im Rahmen einer Bremskraftverstärkung ausgebildet. Die zu verstärkende Bremskraft kann in diesem Fall auf den Hauptzylinder-Kolben mittels des mechanischen Aktuators ausgeübt werden. Gemäß einer anderen Variante ist der elektromechanische Aktuator zur Betätigung des Hauptzylinder-Kolbens zur Bremskrafterzeugung ausgebildet. Diese Variante kann beispielsweise im Rahmen eines Brake-By-Wire (BBW)-Betriebs zum Einsatz kommen, in dem das Bremspedal vom Hauptzylinder-Kolben normalerweise mechanisch entkoppelt ist. Bei einer für den BBW-Betrieb ausgelegten Bremsanlage kommt der mechanische Aktuator etwa bei Ausfall einer BBW-Komponente (also bei einer Notbremsung) zur Betätigung des Hauptzylinder-Kolbens zum Einsatz.

Zur Ansteuerung des elektromechanischen Aktuators, der ersten Ventilanordnung sowie optionaler weiterer Komponenten der Fahrzeug-Bremsanlage kann die Bremsanlage geeignete Ansteuereinrichtungen aufweisen. Diese Ansteuereinrichtungen können elektrische, elektronische oder programmgesteuerte Baugruppen sowie Kombinationen hiervon umfassen. Beispielsweise können die Ansteuereinrichtungen in einem gemeinsamen oder aber in getrennten Steuergeräten (Electronic Control Units, ECUs) bereitgestellt werden.

Der elektromechanische Aktuator kann einen Elektromotor sowie ein abtriebsseitig mit dem Elektromotor gekoppeltes Getriebe aufweisen. Das Getriebe kann sich konzentrisch oder auch parallel zum mechanischen Aktuator erstrecken. Gemäß einer Variante ist das Getriebe als eine Mutter/Spindel-Anordnung (z.B. als Kugelgewindetrieb) ausgebildet, es sind jedoch auch andere Varianten (z.B. ein Zahnstangen-Gewinde) denkbar.

Der Elektromotor des elektromechanischen Aktuators kann einen sich konzentrisch zum mechanischen Aktuator erstreckenden Rotor aufweisen. Der Rotor kann ein als Mutter/Spindel-Anordnung ausgebildete Gewinde antreiben oder eine Komponente der Mutter/Spindel-Anordnung bilden.

Gemäß einer Variante umfasst die hydraulische Fahrzeug-Bremsanlage ferner eine Entkoppeleinrichtung zum selektiven Entkoppeln des Bremspedals vom Hauptzylinder-Kolben. Ferner kann eine Simulationseinrichtung vorgesehen sein, welche ein für den Fahrer gewohntes Pedalrückwirkungsverhalten bei vom Kolben entkoppeltem Bremspedal bereitstellt. Die Simulationseinrichtung kann auf einem hydraulischen Funktionsprinzip basieren. So kann die Simulationseinrichtung beispielsweise als Zylinder/Kolben-Anordnung zur rückwirkungsbehafteten Aufnahme von Hydraulikfluid ausgebildet sein.

Je nach Ausgestaltung der Fahrzeug-Bremsanlage kann das selektive Entkoppeln des Bremspedals vom Hauptzylinder-Kolben mittels der Entkoppeleinrichtung zu unterschiedlichen Zwecken geschehen. Bei einer gemäß dem BBW-Prinzip ausgelegten Bremsanlage kann abgesehen von einem Notbremsbetrieb (in dem das Bremspedal über den mechanischen Aktuator mit dem Hauptzylinder-Kolben gekoppelt ist) eine ständige Entkopplung vorgesehen sein. Bei einer regenerativen Bremsanlage kann eine derartige Entkoppelung zumindest im Rahmen eines regenerativen Bremsbetriebs (Generatorbetrieb) erfolgen. Bei anderen Bremsanlagen können die Entkoppeleinrichtung sowie die Simulationseinrichtung auch völlig entfallen.

Die Fahrzeug-Bremsanlage kann ferner wenigstens einen Niederdruckspeicher umfassen, der im Rahmen eines Bremsdruckabbaus aus den Radbremsen abgelassenes Hydraulikfluid aufnimmt. Der wenigstens eine Niederdruckspeicher kann über das jeder Radbremse zugeordnete zweite Ventil mit der entsprechenden Radbremse koppelbar sein. Ferner kann der Niederdruckspeicher zur Abgabe des aufgenommenen Hydraulikfluids über ein Rückschlagventil mit einer Eingangsseite des ersten Ventils gekoppelt sein. Das Rückschlagventil ist gemäß einer Ausbildung derart geschaltet, dass kein aus dem Hauptzylinder verdrängtes Hydraulikfluid unmittelbar in den Niederdruckspeicher gelangen kann.

Als Option umfasst die Fahrzeug-Bremsanlage einen elektrisch betriebenen und zusätzlich zum Hauptzylinder vorgesehenen Hydraulikdruckerzeuger. Der Hydraulikdruckerzeuger kann beispielsweise eine Hydraulikpumpe oder eine Plunger-Anordnung sowie einen Elektromotor zur Betätigung derselben umfassen. Der wenigstens eine Niederdruckspeicher kann zur Abgabe des aufgenommenen Hydraulikfluids an eine Eingangsseite des Hydraulikdruckerzeugers gekoppelt sein. Auf diese Weise kann das vom Hydraulikdruckerzeuger geförderte Hydraulikfluid (auch) aus dem Niederdruckspeicher entnommen werden.

Der Hydraulikdruckerzeuger kann in einem von der Bremskraftverstärkung oder Bremskrafterzeugung verschiedenen Bremsregelbetrieb ansteuerbar sein. Wie bereits oben erläutert, kann eine entsprechende Ansteuereinrichtung ein geeignet programmiertes Steuergerät umfassen. Bei Vorsehen des Hydraulikdruckerzeugers, der in einem von der Bremskraftverstärkung oder Bremskrafterzeugung verschiedenen Bremsregelbetrieb ansteuerbar ist, kann gemäß einer Variante der elektromechanische Aktuator ausschließlich für den Zweck der Bremskraftverstärkung oder Bremskrafterzeugung bei Betätigung des Bremspedals ansteuerbar sein. Alternativ hierzu kann der elektromechanische Aktuator zusätzlich in wenigstens einem vom ABS-Regelbetrieb verschiedenen Bremsregelbetrieb ansteuerbar sein, wobei in diesem Fall der Hydraulikdruckerzeuger ausschließlich im ABS-Regelbetrieb ansteuerbar sein kann. Dieser vom ABS-Regelbetrieb verschiedene Bremsregelbetrieb kann einen Schlupfregelbetrieb und/oder ein elektronische Stabilitätsprogramm (ESP) umfassen.

Im Hinblick auf den Schlupfregelbetrieb sowie das elektronische Stabilitätsprogramm kann eine zweite Ventilanordnung vorgesehen sein, die ein selektives Abkoppeln des Hauptzylinders von einer Ausgangsseite des Hydraulikdruckerzeugers in den genannten Betriebsarten (Schlupfregelbetrieb/ESP) ermöglicht. Die zweite Ventilanordnung kann beispielsweise pro Bremskreis ein 2/2-Wege-Ventil umfassen.

Bei einer alternativen Ausgestaltung der hydraulischen Fahrzeug-Bremsanlage umfasst diese keinen zusätzlich zum Hauptzylinder vorgesehenen, elektromotorisch betätigbaren Hydraulikdruckerzeuger. In diesem Fall können sämtliche im Rahmen eines Bremsregelbetriebs anfallenden Druckmodulationen mittels des elektromechanischen Aktuators realisiert werden. Der elektromechanische Aktuator kann somit zusätzlich zur Bremskraftverstärkung oder Bremskrafterzeugung bei einer Betätigung des Bremspedals (v.a. bei einer Betriebsbremsung) auch im Rahmen eines Bremsregelbetriebs (einschließlich eines ABS-Regelbetriebs) ansteuerbar sein.

Alternativ oder zusätzlich zum Hydraulikdruckabbau kann die zusätzliche Ventilanordnung auch dazu ausgelegt sein, wenigstens eine Kammer des Hauptzylinders, in welcher der Hauptzylinder-Kolben aufgenommen ist, selektiv mit einem drucklosen Hydraulikfluidreservoir zu koppeln. Eine derartige Kopplung kann beispielsweise im regenerativen Bremsbetrieb wünschenswert sein. Auf diese Weise kann im regenerativen Bremsbetrieb bei einer Betätigung des Hauptzylinder-Kolbens das Hydraulikfluid aus der wenigstens einen Hauptzylinder-Kammer zum drucklosen Hydraulikfluidreservoir gelangen, ohne dass es zu einem (im regenerativen Bremsbetrieb in der Regel unerwünschten) Bremsdruckaufbau an den Radbremsen kommt.

Es wird ferner ein Verfahren zum Betreiben einer hydraulischen Fahrzeug-Bremsanlage angegeben. Die Fahrzeug-Bremsanlage besitzt einen Hauptzylinder mit wenigstens einem darin verschieblich aufgenommenen Kolben, einen mit einem Bremspedal gekoppelten oder koppelbaren mechanischen Aktuator zur Betätigung des Kolbens, einen elektromechanischen Aktuator zur Betätigung des Kolbens sowie eine erste Ventilanordnung, die pro Radbremse ein erstes Ventil zum selektiven Abkoppeln der Radbremse vom Hauptzylinder und ein zweites Ventil zum selektiven Bremsdruckabbau an der Radbremse besitzt, und eine zur ersten Ventilanordnung zusätzlich angeordnete Ventilanordnung, die einen Abbau von Hydraulikdruck bei Ausfall des elektromechanischen Aktuators ermöglicht. Das Verfahren umfasst das Ansteuern des elektromechanischen Aktuators zumindest zur Bremskraftverstärkung oder Bremskrafterzeugung bei einer Betätigung des Bremspedals sowie das Ansteuern der ersten Ventilanordnung zumindest im Rahmen eines ABS-Regelbetriebs, wobei die zusätzliche Ventilanordnung angesteuert wird, bei einem Ausfall des elektromechanischen Aktuators und bei geöffnetem ersten Ventil die zugehörige Radbremse zum Hydraulikdruckabbau selektiv mit einem drucklosen Hydraulikreservoir zu koppeln. Das Ansteuern des elektromechanischen Aktuators sowie der ersten Ventilanordnung kann zeitlich versetzt oder zeitlich überlappend erfolgen.

### Kurze Beschreibung der Zeichnungen

Weitere Vorteile, Aspekte und Einzelheiten der hier vorgestellten hydraulischen Fahrzeug-Bremsanlage ergeben sich aus der nachfolgenden Beschreibung exemplarischer Ausführungsbeispiele sowie aus den Figuren. Es zeigen:
- Fig. 1: ein erstes Ausführungsbeispiel einer hydraulischen Fahrzeug-Bremsanlage;
- Fig. 2: ein zweites Ausführungsbeispiel einer hydraulischen Fahrzeug-Bremsanlage; und
- Fig. 3: ein drittes Ausführungsbeispiel einer hydraulischen Fahrzeug-Bremsanlage;

### Detaillierte Beschreibung

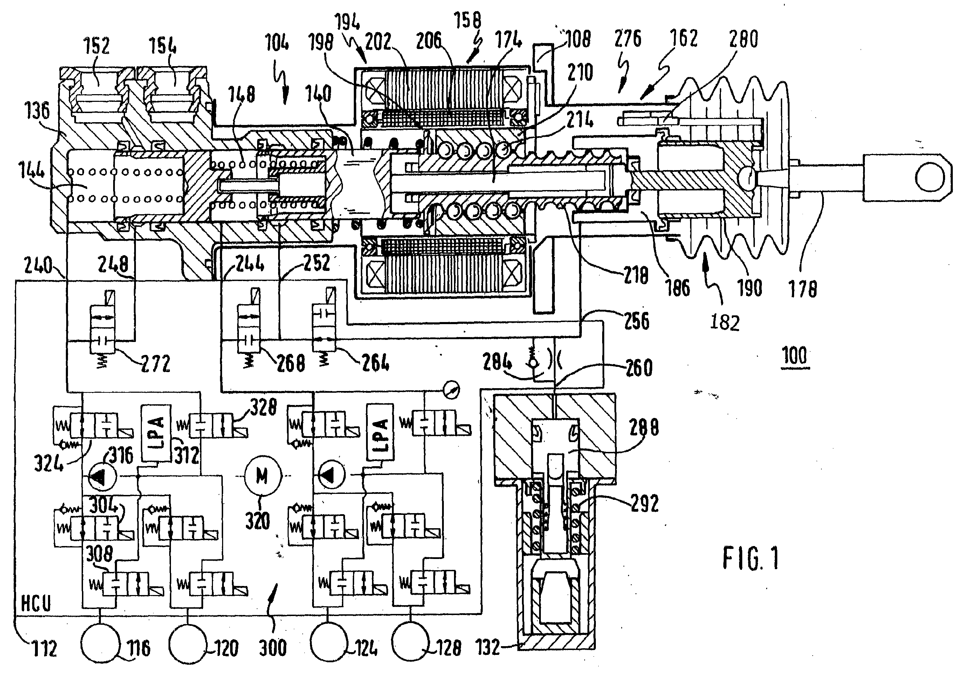

Fig. 1 zeigt ein erstes Ausführungsbeispiel einer hydraulischen Fahrzeug-Bremsanlage 100, die auf dem Brake-By-Wire (BBW)-Prinzip basiert und optional (z. B. bei Hybrid-Fahrzeugen) auch in einem regenerativen Modus betrieben werden kann. Die Bremsanlage 100 umfasst eine Hauptzylinder-Baugruppe 104, die an einer Spritzwand 108 des Fahrzeugs montiert ist, eine hydraulische Steuereinheit (Hydraulic Control Unit, HCU) 112, die funktional zwischen der Hauptzylinder-Baugruppe 104 und Radbremsen 116, 120, 124, 128 des Fahrzeugs angeordnet ist, sowie eine Simulationseinrichtung 132 zum Bereitstellen eines Pedalrückwirkungsverhaltens. Die HCU 112 ist als integrierte Baugruppe ausgebildet und umfasst eine Vielzahl von Einzelkomponenten sowie mehrere Fluideinlässe und Fluidauslässe.

Die Hauptzylinder-Baugruppe 104 weist einen Hauptzylinder 136 mit einem darin verschieblich aufgenommenen Kolben 140 auf. Der Hauptzylinder-Kolben 140 ist als Tandemkolben ausgebildet und definiert im Hauptzylinder 136 zwei voneinander getrennte Hydraulikkammern 144, 148. Die beiden Hydraulikkammern 144, 148 des Hauptzylinders 136 sind zur Versorgung mit Hydraulikfluid über jeweils einen Anschluss 152, 154 mit einem drucklosen Hydraulikfluid-Reservoir (nicht dargestellt) verbunden.

Die Hydraulik-Baugruppe 104 umfasst ferner einen elektromechanischen Aktuator 158 sowie einen mechanischen Aktuator 162. Sowohl der elektromechanische Aktuator 158 als auch der mechanische Aktuator 162 ermöglichen eine Betätigung des Hauptzylinder-Kolbens 140 und wirken dazu auf eine eingangsseitige Stirnfläche des Hauptzylinder-Kolbens 140 ein. Die Aktuatoren 158, 162 sind derart ausgebildet, dass sie unabhängig voneinander den Hauptzylinder-Kolben 140 zu betätigen vermögen.

Der mechanische Aktuator 162 besitzt ein Betätigungsglied 174, das stangenförmig ausgebildet ist und unmittelbar auf die eingangsseitige Stirnfläche des Hauptzylinder-Kolbens 140 einzuwirken vermag. Ferner weist der mechanische Aktuator 162 ein Eingangsglied 178 auf. Das Eingangsglied 178 ist dazu ausgebildet, gelenkig mit einem Bremspedal (nicht dargestellt) gekoppelt zu werden.

Eine Entkoppeleinrichtung 182 ist funktional zwischen dem Eingangsglied 178 und dem Betätigungsglied 174 vorgesehen. Die Entkoppeleinrichtung 182, welche als Teil des mechanischen Aktuators 162 aufgefasst werden kann, ermöglicht ein selektives Entkoppeln des Hauptzylinder-Kolbens 140 vom Bremspedal. Hierzu umfasst die Entkoppeleinrichtung 182 eine Hydraulikkammer 186 sowie einen in der Hydraulikkammer 186 verschieblich aufgenommenen Stößelkolben 190. Der Stößelkolben 190 ist eingangsseitig über ein Kugelgelenk mit dem Eingangsglied 178 gekoppelt. Ausgangsseitig wirkt der Stößelkolben 190 im Notbremsbetrieb unmittelbar auf die dem Hauptzylinder-Kolben 140 abgewandte Stirnseite des Betätigungsglieds 174 ein. Die Funktionsweise der Entkoppeleinrichtung 182 wird später im Zusammenhang mit der HCU 112 näher erläutert.

Der elektromechanische Aktuator 158 weist einen Elektromotor 194 sowie ein dem Motor 194 abtriebsseitig nachfolgendes Getriebe 198 auf. Der Motor 194 besitzt eine zylindrische Bauform und erstreckt sich konzentrisch zum Hauptzylinder-Kolben 140 sowie zum Betätigungsglied 174 des mechanischen Aktuators 162. Genauer gesagt ist der Motor 194 radial außen bezüglich dieser Komponenten 140, 174 angeordnet. Der Motor 194 umfasst einen Stator 202 sowie einen radial innen bezüglich des Stators 202 vorgesehenen Rotor 206. Der Rotor 206 erstreckt sich konzentrisch zum Hauptzylinder-Kolben 140 sowie zum Betätigungsglied 174 des mechanischen Aktuators 162.

Der Rotor 206 des Motors 194 ist drehfest mit dem als Kugelgewindetrieb ausgebildeten Getriebe 198 gekoppelt. Hierbei treibt der Rotor 206 ein axial unverschieblich gelagertes Hülsenglied 210 des Getriebes 198 an. Die Drehbewegung des Hülsenglieds 210 überträgt sich über eine Vielzahl von Kugelkörpern 214 auf eine axial verschieblich gelagerte Hohlspindel 218 des Getriebes 198, so dass die Drehbewegung des Hülsenglieds 210 zu einer axialen Verschiebung der Hohlspindel 218 führt. Die in Fig. 1 linke Stirnseite der Hohlspindel 218 kann dabei in Anlage an die in Fig. 1 rechte Stirnseite des Hauptzylinder-Kolbens 140 gelangen und in Folge dessen den Hauptzylinder-Kolben 140 in Fig. 1 nach links verschieben. Alternativ hierzu lässt sich der Hauptzylinder-Kolben 140 auch von dem sich durch die Hohlspindel 218 erstreckenden Betätigungsglied 174 des mechanischen Aktuators 162 in Fig. 1 nach links verschieben. Ein Verschieben des Hauptzylinder-Kolbens 140 in Fig. 1 nach rechts wird mittels des in den Hydraulikkammern 144, 148 herrschenden Hydraulikdrucks (bei Loslassen des Bremspedals und Verschieben der Hohlspindel 118 nach rechts) bewerkstelligt.

In dem in Fig. 1 veranschaulichten Ausführungsbeispiel umfasst die Fahrzeug-Bremsanlage zwei Bremskreise, wobei die beiden Hydraulikkammern 144, 148 des Hauptzylinders 136 jeweils einem Bremskreis zugeordnet sind. Die HCU 112 besitzt pro Bremskreis einen mit der jeweiligen Hydraulikkammer 144, 148 gekoppelten Einlass 240, 244 für Hydraulikfluid sowie jeweils einen entsprechenden Auslass 248, 252. Die beiden Auslässe 248, 252 sind über entsprechende Ringkammern im Hauptzylinder 136 und die Hauptzylinder-Anschlüsse 152, 154 mit dem in Fig. 1 nicht dargestellten drucklosen Hydraulikfluid-Reservoir verbunden. Die HCU 112 besitzt ferner einen Hydraulikanschluss 256 für die Hydraulikkammer 186 der Entkoppeleinrichtung 182 sowie einen weiteren Hydraulikanschluss 260 für die Simulationseinrichtung 132.

Der Einlass 240 und der Auslass 248 der Hydraulikkammer 144 können über ein 2/2-Wege-Ventil 272 miteinander verbunden werden. Auch zwischen dem Einlass 244 und dem Auslass 252 der Hydraulikkammer 148 ist ein 2/2-Wege-Ventil 268 angeordnet. Die beiden Ventile 268, 272 ermöglichen den Abbau von Hydraulikdruck an den Radbremsen 116, 120, 124, 128 bei Ausfall (z.B. Blockierung) des elektromechanischen Aktuators 158. Zu diesem Zweck werden die beiden Ventile 268, 272 in ihre geöffnete Stellung übergeführt, wodurch Hydraulikfluid aus den Radbremsen 116, 120, 124, 128 über die Anschlüsse 152, 154 in das drucklose Hydraulikfluid-Reservoir zurückströmen kann.

Die beiden Ventile 268, 272 ermöglichen darüber hinaus im regenerativen Bremsbetrieb (Generatorbetrieb) einen gezielten hydraulischen Kurzschluss zwischen den beiden Hauptzylinder-Kammern 144, 148 einerseits und auf der anderen Seite dem drucklosen Hydraulikfluidreservoir, welches über die Anschlüsse 152, 154 mit den Kammern 144, 148 verbunden wird. Aufgrund dieses hydraulischen Kurzschlusses wird das bei einer Förderbewegung des Hauptzylinder-Kolbens 140 aus den Kammern 144, 148 verdrängte Hydraulikfluid nicht zu den Radbremsen 116, 120, 124, 128 befördert, sondern kann unmittelbar zum drucklosen Hydraulikfluidreservoir gelangen, ohne dass es zu einem (im regenerativen Bremsbetrieb in der Regel unerwünschten) Hydraulikdruckaufbau an den Radbremsen 116, 120, 124, 128 käme. Es ist darauf hinzuweisen, dass der regenerative Bremsbetrieb achsweise implementiert sein kann. Daher kann im Fall einer achsbezogenen Bremskreisaufteilung im regenerativen Bremsbetrieb eines der beiden Ventile 272, 268 geschlossen und das andere geöffnet sein.

Ein weiteres 2/2-Wege-Ventil 264 ist zwischen dem Hydraulikanschluss 256 für die Hydraulikkammer 186 sowie dem Auslass 252 vorgesehen. Das Ventil 264 ermöglicht eine selektive Aktivierung der Simulationseinrichtung 132 und der Entkoppeleinrichtung 182.

Nachfolgend wird zunächst die Funktionsweise der HCU 112 in Bezug auf die Entkoppeleinrichtung 182 und die Simulationseinrichtung 132 erläutert. In diesem Zusammenhang ist nochmals darauf hinzuweisen, dass die Fahrzeug-Bremsanlage 100 gemäß dem Ausführungsbeispiel in Fig. 1 auf dem Prinzip des Brake-By-Wire (BBW) basiert. Dies bedeutet, dass im Rahmen einer normalen Betriebsbremsung das Bremspedal vom Kolben 140 des Hauptzylinders 136 entkoppelt und die Simulationseinrichtung 132 aktiviert ist. Eine Koppelung des Hauptzylinder-Kolbens 140 mit dem Bremspedal (über das Betätigungsglied 174) erfolgt beispielsweise bei Ausfall einer BBW-Komponente des elektromechanischen Aktuators 158, also im Notbremsbetrieb. Für eine Notbremsung befindet sich das Ventil 264 der HCU 112, wie in Fig. 1 veranschaulicht, in einer geöffneten Stellung, während die beiden weiteren Ventile 268, 272 sich in einer geschlossenen Stellung befinden. In der geöffneten Stellung des Ventils 264 nimmt die Entkoppeleinrichtung 182 ihre Koppelstellung ein. In der Koppelstellung ist das Bremspedal mit dem Kolben 140 des Hauptzylinders 136 gekoppelt.

Die Notbremsung wird eingeleitet durch Niedertreten des Bremspedals, wodurch sich das Eingangsglied 178 in Fig. 1 nach links verschiebt. Von dieser Verschiebung des Eingangsglieds 178 wird auch der Stößelkolben 190 erfasst, der sich daraufhin ebenfalls nach links verschiebt. Die Verschiebung des Stößelkolbens 190 führt dazu, dass Hydraulikfluid aus der Hydraulikkammer 186 der Entkoppeleinrichtung 182 verdrängt wird und über das Ventil 264, die im Hauptzylinder 136 ausgebildete Ringkammer sowie den Anschluss 154 in das drucklose Hydraulikfluid-Reservoir gelangt. Die Verschiebung des Stößelkolbens 190 in Fig. 1 überträgt sich über das Betätigungsglied 174 auf den Hauptzylinder-Kolben 140. In Folge dessen verschiebt sich auch der Hauptzylinder-Kolben 140 in Fig. 1 nach links, wodurch Hydraulikfluid aus den Hydraulikkammern 144, 148 des Hauptzylinders 136 über die HCU 112 zu den Radbremsen 116, 120, 124, 128 gefördert wird.

Bei einer Betriebsbremsung ist hingegen zur Aktivierung der Simulationseinrichtung 132 und der Entkoppeleinrichtung 182 das Ventil 264 geschlossen. Aus diesem Grund kann das bei einer Betätigung des Bremspedals aus der Hydraulikkammer 186 der Entkoppeleinrichtung 182 verdrängte Hydraulikfluid nicht mehr zum drucklosen Hydraulikfluid-Reservoir gelangen, sondern wird über eine Drosseleinrichtung 284 mit parallel geschaltetem Rückschlagventil in die Simulationseinrichtung 132 gefördert. Die Simulationseinrichtung 132 besitzt eine Hydraulikkammer mit einem darin angeordneten, federkraftbeaufschlagten Simulatorkolben 288. Die Kennlinie der den Simulatorkolben 288 vorspannenden Schraubenfeder 292 ist derart gewählt, dass das aus einem Verschieben des Hauptzylinder-Kolbens 140 resultierende Pedalrückwirkungsverhalten simuliert wird.

Im Rahmen der Betriebsbremsung übernimmt der elektromechanische Aktuator 158 im BBW-Modus eine Bremskrafterzeugungsfunktion. Dabei wird die durch Niedertreten des Bremspedals angeforderte Bremskraft dadurch erzeugt, dass mittels des Elektromotors 194 die Hohlspindel 218 in Fig. 1 nach links bewegt und dadurch eine Kraft auf den Hauptzylinder-Kolben 140 ausgeübt wird. Die Höhe der daraus resultierenden Bremskraft wird in Abhängigkeit der sensorisch erfassten Bremspedalbetätigung eingestellt. Zu diesem Zweck ist ein Pedalwegsensor 276 vorgesehen, dessen Ausgangssignal von einem den Elektromotor 194 ansteuernden Steuergerät (nicht dargestellt) ausgewertet wird. Der Pedalwegsensor 276 umfasst einen starr mit dem Stößelkolben 190 gekoppelten Signalgeber 280 sowie einen den Signalgeber 280 erfassenden Detektor (nicht dargestellt).

Bei einer Betriebsbremsung im BBW-Modus wird stets sichergestellt, dass, wie in Fig. 1 erkennbar, ein gewisser Abstand zwischen den einander zugewandeten Stirnseiten des Betätigungsglieds 174 einerseits und des Stößelkolbens 190 andererseits herrscht. Dieser Abstand entspricht einer Entkopplung des Bremspedals vom Kolben 140 des Hauptzylinders 136 und damit einer Aktivierung der Entkoppeleinrichtung 182. Zur Aufrechterhaltung des Abstands wird die Position des Stößelkolbens 190 (bzw. des Bremspedals) mittels des Sensors 276 fortlaufend erfasst und der Elektromotor 194 in Abhängigkeit der Position des Stößelkolbens 190 derart angesteuert, dass das magnetisch mit der Hohlspindel 218 gekoppelte Betätigungsglied 174 (unter Betätigung des Kolbens 140 des Hauptzylinders 136) zusammen mit der Hohlspindel 218 in Fig. 1 nach links bewegt wird.

Die HCU 112 besitzt in Bezug auf den Bremsregelbetrieb (ABS, ASR, ESP, etc.) einen im Prinzip herkömmlichen Aufbau mit insgesamt 12 Ventilen (zusätzlich zu den bereits erläuterten Ventilen 264, 268, 272). Da der elektromechanische Aktuator 158 aufgrund einer entsprechenden Auslegung des diesem Aktuator 158 zugeordneten Steuergeräts lediglich im Rahmen einer Bremskrafterzeugung ansteuerbar ist, werden die zusätzlichen Bremsregelfunktionen in bekannter Weise mittels der HCU 112 bewerkstelligt. Zu diesem Zweck besitzt die HCU 112 eine herkömmliche ABS-Ventilanordnung 300, die nachfolgend unter beispielhafter Bezugnahme auf die Radbremse 116 näher erläutert wird.

Wie in Fig. 1 veranschaulicht, umfasst die ABS-Ventilanordnung 300 für die Radbremse 116 (wie auch für die weiteren Radbremsen 120, 124, 128) je ein erstes Ventil 304 zum selektiven Abkoppeln der Radbremse 116 vom Hauptzylinder 136 sowie ein zweites Ventil 308 zum selektiven Bremsdruckabbau an der Radbremse 116. Bei einer Betriebsbremsung befinden sich die beiden Ventile 304, 308 in der in Fig. 1 veranschaulichten Stellung, so dass Hydraulikfluid aus der Hydraulikkammer 144 des Hauptzylinders 136 zur Radbremse 116 (und wieder zurück) gelangen kann.

Im ABS-Regelbetrieb werden zur Realisierung von Druckerhöhungs-, Druckhalte- und Druckabbauphasen die Ventile 304, 308 von einem ABS-Steuergerät (nicht dargestellt) in geeigneter Weise angesteuert. So werden in Druckhaltephasen beide Ventile 304, 308 geschlossen, während in Druckabbauphasen das Ventil 304 geschlossen und das Ventil 308 geöffnet wird, so dass Hydraulikfluid aus der Radbremse 116 in den Niederdruckspeicher 312 gelangen kann.

Zum Bremsdruckaufbau im Bremsregelbetrieb (also unabhängig von einer Betätigung des Bremspedals durch den Fahrer) ist ein Hydraulikdruckerzeuger in Gestalt einer Hydraulikpumpe 316 mit einem zugeordneten Elektromotor 320 vorgesehen. Die Hydraulikpumpe 316 wird insbesondere zur Druckmodulation im ABS-Betrieb eingesetzt.

Ein fahrerunabhängiger Bremsdruckaufbau kann aber auch beispielsweise im Rahmen eines Schlupfregelbetriebs und/oder eines ESP-Eingriffs erforderlich werden. Zum fahrerunabhängigen Bremsdruckaufbau wird zunächst der Hauptzylinder 136 von dem Ausgang der Hydraulikpumpe 316 abgekoppelt, indem ein Sperrventil 324 geschlossen wird, während die beiden Ventile 304, 308 der ABS-Ventilanordnung 300 die in Fig. 1 veranschaulichte Stellung annehmen und ein Absperrventil 328 geöffnet wird. Das von der Hydraulikpumpe 316 geförderte Hydraulikfluid wird dabei entweder dem Niederdruckspeicher 312 entnommen oder (über das geöffnete Absperrventil 328) der Kammer 144.

Bei der in Fig. 1 veranschaulichten Ausführungsform übernimmt der elektromechanische Aktuator 158 ausschließlich die Funktion eines Bremskraftverstärkers, dem ein konventionelles Bremsregelsystem (HCU 112) in der hydraulischen Verbindung zu den Radbremsen 116, 120, 124, 128 nachgeschaltet ist. Sämtliche Bremsregelfunktionen (ABS, ASR, ESP, etc.) werden daher in herkömmlicher Weise mittels der HCU 112 implementiert.

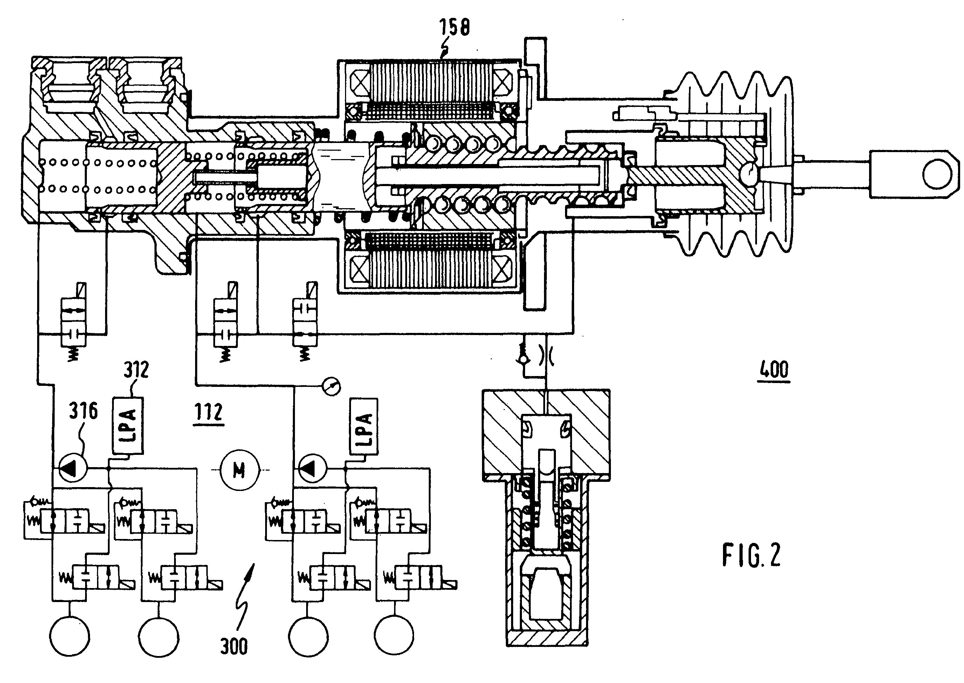

Fig. 2 zeigt eine Fahrzeug-Bremsanlage 400 gemäß einem alternativen Ausführungsbeispiel. Da das Ausführungsbeispiel gemäß Fig. 2 auf dem oben beschriebenen Ausführungsbeispiel gemäß Fig. 1 basiert, werden im Folgenden lediglich die Unterschiede besonders erläutert.

Die Fahrzeug-Bremsanlage 400 gemäß Fig. 2 besitzt eine gegenüber dem ersten Ausführungsbeispiel modifizierte HCU 112. Genauer gesagt umfasst die HCU 112 gemäß Fig. 2 zwar noch die ABS-Ventilanordnung 300 mit dem ABS-Regelbetrieb zugeordneter Hydraulikpumpe 316 und entsprechendem Niederdruckspeicher 312. Die Ventile für den vom ABS-Regelbetrieb verschiedenen Bremsregelbetrieb (z.B. den ASR- und ESP-Betrieb) sind jedoch entfallen (vgl. Ventile 324 und 328 in Fig. 1).

Bei der Bremsanlage 400 gemäß Fig. 2 erfolgt die Hydrauklikdruckmodulation bei einem vom ABS-Regelbetrieb verschiedenen Bremsregelbetrieb mittels des elektromechanischen Aktuators 158. Mit anderen Worten wird der elektromechanische Aktuator 158 gemäß dem zweiten Ausführungsbeispiel nicht nur zur Bremskrafterzeugung im Rahmen einer Betriebsbremsung, sondern auch beispielsweise im ASR- und/oder ESP-Regelbetrieb angesteuert. Das entsprechende Steuergerät des elektromechanischen Aktuators 158 ist daher gegenüber dem ersten Ausführungsbeispiel ebenfalls modifiziert.

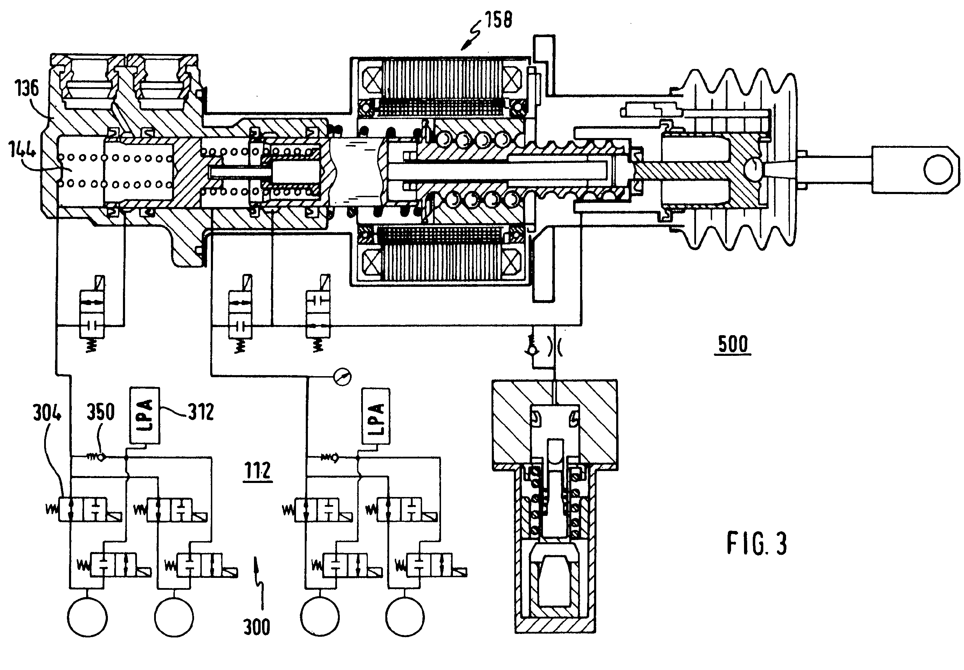

Fig. 3 zeigt eine Fahrzeug-Bremsanlage 500 gemäß einem weiteren Ausführungsbeispiel. Das Ausführungsbeispiel gemäß Fig. 3 basiert auf dem Ausführungsbeispiel gemäß Fig. 2, so dass im Folgenden lediglich die Unterschiede näher erläutert werden.

Gegenüber dem Ausführungsbeispiel gemäß Fig. 2 wurde bei der Bremsanlage 500 auf den Hydraulikdruckerzeuger der HCU 112 verzichtet (vgl. Hydraulikpumpe 316 und den dieser zugeordneten Elektromotor 320 in Fig. 2). Ferner ist ein Rückschlagventil 350 zwischen dem Niederdruckspeicher 312 und der Eingangsseite des ABS-Ventils 304 vorgesehen. Das Rückschlagventil 350 ist derart geschaltet, dass aus der Hydraulikkammer 144 des Hauptzylinders 136 gefördertes Hydraulikfluid nicht in den Niederdruckspeicher 312 gelangen kann.

Der elektromechanische Aktuator 158 übernimmt bei der Bremsanlage 500 gemäß Fig. 3 zusätzlich noch die Druckmodulation im Rahmen des ABS-Regelbetriebs. Ein entsprechender Regelmechanismus wird hierzu in das für den elektromechanischen Aktuator 158 vorgesehene Steuergerät implementiert.

Wie sich aus der vorstehenden Beschreibung exemplarischer Ausführungsbeispiele ergibt, werden an den (zumindest) für die Bremskrafterzeugung bei einer Pedalbetätigung vorgesehenen elektromechanischen Aktuator 158 lediglich herkömmliche Dynamikanforderungen gestellt, da bei den Fahrzeug-Bremsanlagen 100, 400, 500 eine herkömmliche ABS-Ventilanordnung 300 zum Einsatz gelangen kann. Die Dynamikanforderungen an den elektromechanischen Aktuator 158 sind daher insbesondere gering im Vergleich zu Fahrzeug-Bremsanlagen gemäß dem "Multiplex"-Konzept. Folglich ist der technische Aufwand für den elektromechanischen Aktuator 158 verhältnismäßig gering.

Darüber hinaus kann in Bezug auf die HCU 112 auf seit vielen Jahren in der Serie bewährte Komponenten zurückgegriffen werden. Diese Tatsache gewährleistet eine hohe Sicherheit in Kombination mit Kostenvorteilen.

Ferner gewährleistet die in den verschiedenen Ausführungsbeispielen vorgeschlagene HCU 112 eine gewisse Redundanz, welche ebenfalls die Sicherheit erhöht. So wird beispielsweise in Bezug auf die Fahrzeug-Bremsanlage 100 gemäß Fig. 1 ein redundantes System zum fahrerunabhängigen Hydraulikaufbau bereitgestellt. In Folge dessen kann bei Ausfall oder Störung des elektromechanischen Aktuators 158 noch immer ein automatischer Bremsvorgang, insbesondere eine Notbremsung, eingeleitet werden.

Es versteht sich, dass gemäß alternative Ausführungsbeispielen die Fahrzeug-Bremsanlage auch eine regenerative Fahrzeug-Bremsanlage oder eine herkömmliche, nicht nach dem BBW-Prinzip betriebene Fahrzeug-Bremsanlage sein kann. Auch bei solchen Ausführungsbeispielen kann die hier beschriebene Technik zum Einsatz gelangen.

## Patentansprüche

1. Hydraulische Fahrzeug-Bremsanlage (100; 400; 500), umfassend:
einen Hauptzylinder (136) mit wenigstens einem darin verschieblich aufgenommenen Kolben (140);
einen mit einem Bremspedal gekoppelten oder koppelbaren mechanischen Aktuator (162) zur Betätigung des Kolbens (140);
einen elektromechanischen Aktuator (158) zur Betätigung des Kolbens (140), wobei der elektromechanische Aktuator (158) zumindest zur Bremskraftverstärkung oder Bremskrafterzeugung bei einer Betätigung des Bremspedals ansteuerbar ist;
eine erste Ventilanordnung (300), die pro Radbremse (116) ein erstes Ventil (304) zum selektiven Abkoppeln der Radbremse (116) vom Hauptzylinder (136) und ein zweites Ventil (308) zum selektiven Bremsdruckabbau an der Radbremse (116) besitzt, wobei die erste Ventilanordnung (300) zumindest im Rahmen eines ABS-Regelbetriebs ansteuerbar ist; und
eine zur ersten Ventilanordnung zusätzliche Ventilanordnung (268, 272), die einen Abbau von Hydraulikdruck bei Ausfall des elektromechanischen Aktuators (158) ermöglicht, wobei die hydraulische Fahrzeug-Bremsanlage (100; 400; 500) dazu ausgebildet ist, bei einem Ausfall des elektromechanischem Aktuators (158) und bei geöffnetem ersten Ventil (304) die zugehörige Radbremse (116) mittels der zusätzlichen Ventilanordnung (268, 272) zum Hydraulikdruckabbau selektiv mit einem drucklosen Hydraulikfluidreservoir zu koppeln.

2. Fahrzeug-Bremsanlage nach Anspruch 1, wobei der elektromechanische Aktuator (158) ein sich konzentrisch zum mechanischen Aktuator (162) erstreckendes Getriebe (198) aufweist, wobei, optional, das Getriebe (198) als Mutter/Spindelanordnung (210; 214; 218) ausgebildet ist.

3. Fahrzeug-Bremsanlage nach einem der vorhergehenden Ansprüche, wobei der elektromechanische Aktuator (158) wenigstens einen Elektromotor (194) mit einem sich konzentrisch zum mechanischen Aktuator (162) erstreckenden Rotor (206) aufweist.

4. Fahrzeug-Bremsanlage nach Anspruch 2 und Anspruch 3, wobei der Rotor (206) die Mutter/Spindelanordnung (210) antreibt oder eine Komponente der Mutter/Spindelanordnung bildet.

5. Fahrzeug-Bremsanlage nach einem der vorhergehenden Ansprüche, ferner umfassend:
eine Entkoppeleinrichtung (182) zum selektiven Entkoppeln des Bremspedals vom Kolben (140) des Hauptzylinders (136); und
eine Simulationseinrichtung (132) zum Bereitstellen eines Pedalrückwirkungsverhaltens bei vom Kolben (140) entkoppeltem Bremspedal.

6. Fahrzeug-Bremsanlage nach einem der vorhergehenden Ansprüche, ferner umfassend:
wenigstens einen Niederdruckspeicher (312), der über das jeder Radbremse (116) zugeordnete zweite Ventil (308) mit der Radbremse (116) koppelbar ist, um im Rahmen eines Bremsdruckabbaus abgelassenes Hydraulikfluid aufzunehmen, wobei, optional, der wenigstens eine Niederdruckspeicher (312) zur Abgabe des aufgenommenen Hydraulikfluids über ein Rückschlagventil (350) mit einer Eingangsseite des ersten Ventils (304) gekoppelt ist.

7. Fahrzeug-Bremsanlage nach einem der vorhergehenden Ansprüche, ferner umfassend:
einen elektrisch betriebenen und zusätzlich zum Hauptzylinder (136) vorgesehenen Hydraulikdruckerzeuger (316; 320), wobei der Hydraulikdruckerzeuger (316; 320) in einem Bremsregelbetrieb ansteuerbar ist, der von der Bremskraftverstärkung oder Bremskrafterzeugung bei einer Betätigung des Bremspedals verschiedenen ist.

8. Fahrzeug-Bremsanlage nach den Ansprüchen 6 und 7, wobei der wenigstens eine Niederdruckspeicher (312) zur Abgabe des aufgenommenen Hydraulikfluids an eine Eingangsseite des Hydraulikdruckerzeugers (316; 320) gekoppelt ist.

9. Fahrzeug-Bremsanlage nach Anspruch 7 oder 8, wobei der elektromechanische Aktuator (158) ausschließlich für den Zweck der Bremskraftverstärkung oder Bremskrafterzeugung bei einer Betätigung des Bremspedals ansteuerbar ist.

10. Fahrzeug-Bremsanlage nach Anspruch 7 oder 8, wobei
der elektromechanischen Aktuator (158) in wenigstens einem vom ABS-Regelbetrieb verschiedenen Bremsregelbetrieb ansteuerbar ist; und
der Hydraulikdruckerzeuger (316; 320) ausschließlich im ABS-Regelbetrieb ansteuerbar ist, wobei, optional, der vom ABS-Regelbetrieb verschiedene Bremsregelbetrieb wenigstens eine der folgenden Betriebsarten umfasst:
- einen Schlupfregelbetrieb; und
- ein elektronisches Stabilitätsprogramm, oder ESP.

11. Fahrzeug-Bremsanlage nach einem der Ansprüche 7 bis 10, ferner umfassend:
eine zweite Ventilanordnung (324), die zum selektiven Abkoppeln des Hauptzylinders (136) von einer Ausgangsseite des Hydraulikdruckerzeugers (316; 320) in wenigstens einer der folgenden Betriebsarten ausgebildet ist:
- einem Schlupfregelbetrieb; und
- einem elektronischen Stabilitätsprogramm, oder ESP.

12. Fahrzeug-Bremsanlage nach einem der Ansprüche 1 bis 6, wobei die Fahrzeug-Bremsanlage keinen zusätzlich zum Hauptzylinder (136) vorgesehenen, elektromotorisch betätigbaren Hydraulikdruckerzeuger aufweist.

13. Fahrzeug-Bremsanlage nach Anspruch 12, wobei der elektromechanische Aktuator (158) im Rahmen eines Bremsregelbetriebs ansteuerbar ist, der verschieden ist von der Bremsdruckverstärkung oder Bremsdruckerzeugung bei einer Betätigung des Bremspedals, wobei, optional, der Bremsregelbetrieb den ABS-Regelbetrieb umfasst.

14. Fahrzeug-Bremsanlage nach Anspruch 1, wobei die zur ersten Ventilanordnung zusätzliche Ventilanordnung (268, 272)
ferner zum selektiven Koppeln wenigstens einer Kammer (144, 148) des Hauptzylinders (136), in welcher der Kolben (140) aufgenommen ist, mit einem drucklosen Hydraulikfluidreservoir vorgesehen ist, wobei die zur ersten Ventilanordnung zusätzliche Ventilanordnung (268, 272) ausgebildet ist, im regenerativen Bremsbetrieb die Kammer (144, 148) des Hauptzylinders (136) mit dem drucklosen Hydraulikfluidreservoir zu koppeln.

15. Verfahren zum Betreiben einer hydraulischen Fahrzeug-Bremsanlage (100, 400, 500) mit einem Hauptzylinder (136) mit wenigstens einem darin verschieblich aufgenommenen Kolben (140), einem mit einem Bremspedal gekoppelten oder koppelbaren mechanischen Aktuator (162) zur Betätigung des Kolbens (140), einem elektromechanischen Aktuator (158) zur Betätigung des Kolbens, einer ersten Ventilanordnung (300), die pro Radbremse (116) ein erstes Ventil (304) zum selektiven Abkoppeln der Radbremse (116) vom Hauptzylinder (140) und ein zweites Ventil (308) zum selektiven Bremsdruckabbau an der Radbremse (116) besitzt, und eine zur ersten Ventilanordnung zusätzlich angeordnete Ventilanordnung (268, 272), die einen Abbau von Hydraulikdruck bei Ausfall des elektromechanischen Aktuators (158) ermöglicht, wobei der elektromechanische Aktuator (158) zumindest zur Bremskraftverstärkung oder Bremskrafterzeugung bei einer Betätigung des Bremspedals angesteuert wird, wobei die erste Ventilanordnung (300) zumindest im Rahmen eines ABS-Regelbetriebs angesteuert wird, und wobei die zusätzliche Ventilanordnung (268, 272) angesteuert wird, bei einem Ausfall des elektromechanischen Aktuators (158) und bei geöffnetem ersten Ventil (304) die zugehörige Radbremse (116) zum Hydraulikdruckabbau selektiv mit einem drucklosen Hydraulikfluidreservoir zu koppeln.

## Claims

1. Hydraulic vehicle brake system (100, 400, 500), comprising:
a main cylinder (136) with at least one piston (140) being slidably received therein;
a mechanical actuator (162) for operating the piston (140), the actuator being coupled or configured to be coupled with a brake pedal;
an electromechanical actuator (158) for operating the piston (140), wherein the electromechanical actuator (158) is controllable at least for brake force boosting or brake force generating when operating the brake pedal;
a first valve arrangement (300) which has per wheel brake (116) a first valve (304) for selectively disconnecting the wheel brake (116) from the main cylinder (136) and a second valve (308) for a selective brake pressure reduction at the wheel brake (116), wherein the first valve arrangement (300) is controllable at least in connection with an ABS-control operation; and
a valve arrangement (268, 272) in addition to said first valve arrangement, which enables a reduction of hydraulic pressure in case of a failure of the electromechanical actuator (158), wherein the hydraulic vehicle brake system (100, 400, 500) is configured to, in case of a failure of the electromechanical actuator (158) and with the first valve (304) being opened, couple the associated wheel brake (116) with a pressureless hydraulic fluid reservoir by means of the additional valve arrangement (268, 272) for the purpose of hydraulic pressure reduction.

2. Vehicle brake system according to claim 1,
wherein the electromechanical brake actuator (158) has a gear (198) extending concentrically to the mechanical actuator (162), wherein, optionally, the gear (198) is configured as a nut/spindle arrangement (210, 214, 218).

3. Vehicle brake system according to one of the preceding claims,
wherein the electromechanical actuator (158) comprises at least one electric motor (194) with a rotor (206) extending concentrically to the mechanical actuator (162).

4. Vehicle brake system according to claim 2 and claim 3,
wherein the rotor (206) drives the nut/spindle arrangement (210) or forms a component of the nut/spindle arrangement.

5. Vehicle brake system according to one of the preceding claims, further comprising:
a decoupling device (182) for selectively decoupling the brake pedal from the piston (140) of the main cylinder (136); and
a simulation device (132) for providing a pedal feedback behaviour at the brake pedal which is decoupled from the piston (140).

6. Vehicle brake device according to one of the preceding claims, further comprising:
at least one low pressure reservoir (312) which is coupable to the wheel brake (116) via the second valve (308) being associated with each wheel brake (116) for receiving hydraulic fluid that is released in connection with a brake pressure reduction, wherein, optionally, for releasing the received hydraulic fluid, the at least one low pressure reservoir (312) is coupled via a check valve (350) to an input side of the first valve (304).

7. Vehicle brake system according to one of the preceding claims, further comprising:
an electrically operated hydraulic pressure generator (316, 320) that is provided in addition to the main cylinder (136), wherein the hydraulic pressure generator (316, 320) is controllable during a brake control operation which is different from the brake force boosting or brake force generating when operating the brake pedal.

8. Vehicle brake system according to claims 6 and 7,
wherein the at least one low pressure reservoir (312) is coupled to an input side of the hydraulic pressure generator (316, 320) for releasing the received hydraulic fluid.

9. Vehicle brake system according to claims 7 or 8, wherein the electromechanical actuator (158) is solely controllable for the purpose of brake force boosting or brake force generating when operating the brake pedal.

10. Vehicle brake system according to claims 7 or 8, wherein
the electromechanical actuator (158) is controllable during at least one brake control operation being different from an ABS-control operation; and
the hydraulic pressure generator (316, 320) is solely controllable according to the ABS-control operation, wherein, optionally, the brake control operation being different from the ABS-control operation comprises at least one of the following operation modes:
- a traction control operation; and
- an electronic stability program, or ESP.

11. Vehicle brake system according to one of claims 7 to 10, further comprising:
a second valve arrangement (324) which is configured to selectively decouple the main cylinder (136) from an output side of the hydraulic pressure generator (316, 320) in at least one of the following operation modes:
- a traction control operation; and
- an electronic stability program, or ESP.

12. Vehicle brake system according to one of claims 1 to 6,
wherein the vehicle brake system does not comprise an electromotively operable hydraulic pressure generator being provided in addition to the main cylinder (136).

13. Vehicle brake system according to claim 12,
wherein the electromechanical actuator (158) is controllable in connection with a brake control operation which is different from the brake force boosting or brake force generating when operating the brake pedal, wherein, optionally, the brake control operation comprises the ABS-control operation.

14. Vehicle brake system according to claim 1,
wherein the valve arrangement (268, 272) being provided in addition to the first valve arrangement is further provided for the selective coupling of at least one chamber (144, 148) of the main cylinder (136) in which the piston (140) is received with a pressureless hydraulic fluid reservoir, wherein the valve arrangement (268, 272) being provided in addition to the first valve arrangement is configured to couple the chamber (144, 148) of the main cylinder (136) with the pressureless hydraulic fluid reservoir during a regenerative brake operation.

15. Method for operating a hydraulic vehicle brake system (100, 400, 500) with a main cylinder (136) with at least one piston (140) being slidably received therein, a mechanical actuator (162) for operating the piston (140), the actuator being coupled or configured to be coupled with a brake pedal, an electromechanical actuator (158) for operating the piston (140), a first valve arrangement (300) which has per wheel brake (116) a first valve (304) for selectively disconnecting the wheel brake (116) from the main cylinder (136) and a second valve (308) for a selective brake pressure reduction at the wheel brake (116), and a valve arrangement (268, 272) being provided in addition to said first valve arrangement, which enables a reduction of hydraulic pressure in case of a failure of the electromechanical actuator (158), wherein the electromechanical actuator (158) is controlled at least for brake force boosting or brake force generating when operating the brake pedal, wherein the first valve arrangement (300) is controlled at least in connection with an ABS-control operation, and wherein the additional valve arrangement (268, 272) is, during a failure of the electromechanical actuator (158) and with the first valve being opened (394), controlled to selectively couple the associated wheel brake (116) with a pressureless hydraulic fluid reservoir for the purpose of hydraulic pressure reduction.

## Revendications

1. Système de freinage hydraulique de véhicule (100 ; 400 ; 500), comprenant :
un maître-cylindre (136) doté d'au moins un piston (140) logé de manière mobile dans ce dernier,
un actionneur (162) mécanique pouvant être ou étant accouplé à une pédale de frein, destiné à actionner le piston (140),
un actionneur (158) électromécanique destiné à actionner le piston (140), cet actionneur (158) électromécanique pouvant être commandé au moins pour amplifier la force de freinage ou pour générer la force de freinage lors d'un actionnement de la pédale de frein,
un premier agencement de soupapes (300) qui présente pour chaque frein de roue (116) une première soupape (304) destinée à désaccoupler de manière sélective le frein de roue (116) du maître-cylindre (136) et une deuxième soupape (308) destinée à réduire de manière sélective la pression de freinage sur le frein de roue (116), le premier agencement de soupapes (300) pouvant être commandé dans le cadre d'un mode de régulation ABS, et
en plus dudit premier agencement de soupapes, un agencement de soupapes (268, 272) supplémentaire qui permet la réduction de la pression hydraulique en cas de panne de l'actionneur (158) électromécanique, le système de freinage hydraulique de véhicule (100 ; 400 ; 500) étant conçu pour pouvoir, en cas de panne de l'actionneur (158) électromécanique et lorsque la première soupape (304) est ouverte, accoupler le frein de roue (116) connexe à un réservoir de fluide hydraulique non pressurisé, au moyen de l'agencement de soupapes (268, 272) supplémentaire, afin de réduire la pression hydraulique.

2. Système de freinage de véhicule selon la revendication 1, l'actionneur (158) électromécanique présentant une transmission (198) s'étendant de manière concentrique vers l'actionneur (162) mécanique, cette transmission (198) étant optionnellement réalisée sous la forme d'un agencement broche-écrou (210 ; 214 ; 218).

3. Système de freinage de véhicule selon l'une des revendications précédentes, l'actionneur (158) électromécanique présentant au moins un moteur électrique (194) doté d'un rotor (206) s'étendant de manière concentrique vers l'actionneur (162) mécanique.

4. Système de freinage de véhicule selon la revendication 2 et la revendication 3, le rotor (206) entraînant l'agencement broche-écrou (210) ou formant un composant constitutif de celui-ci.

5. Système de freinage de véhicule selon l'une des revendications précédentes, comprenant en outre :
un dispositif de désaccouplement (182) pour désaccoupler de manière sélective la pédale de frein du piston (140) du maître-cylindre (136), et
un dispositif de simulation (132) destiné à renseigner sur le comportement de rétroaction de la pédale de frein lorsque cette dernière est désaccouplée du piston (140).

6. Système de freinage de véhicule selon l'une des revendications précédentes, comprenant en outre :
au moins un réservoir basse pression (312) pouvant être accouplé au frein de roue (116) par le biais de la deuxième soupape (308) associée à chaque frein de roue (116) afin de recueillir le fluide hydraulique évacué dans le cadre d'une réduction de freinage, ledit au moins un réservoir basse pression (312) étant optionnellement accouplé à un côté entrée de la première soupape (304) par l'intermédiaire d'un clapet anti-retour (350) pour délivrer le fluide hydraulique recueilli.

7. Système de freinage de véhicule selon l'une des revendications précédentes, comprenant en outre :
un générateur de pression hydraulique (316 ; 320) fonctionnant électriquement et prévu en complément du maître-cylindre (136), ce générateur de pression hydraulique (316 ; 320) pouvant être commandé dans un mode de régulation de freinage différent de l'amplification ou de la production de la force de freinage lors d'un actionnement de la pédale de frein.

8. Système de freinage de véhicule selon les revendications 6 et 7, ledit au moins un réservoir basse pression (312) étant accouplé à un côté entrée du générateur de pression hydraulique (316 ; 320) afin de délivrer le fluide hydraulique recueilli.

9. Système de freinage de véhicule selon la revendication 7 ou 8, l'actionneur (158) électromécanique pouvant être commandé dans le seul but d'amplifier ou de produire une force de freinage lors d'un actionnement de la pédale de frein.

10. Système de freinage de véhicule selon la revendication 7 ou 8,
l'actionneur (158) électromécanique pouvant être commandé dans au moins un mode de régulation de freinage différent du mode de régulation ABS, et
le générateur de pression hydraulique (316 ; 320) ne pouvant être commandé qu'en mode de régulation ABS, le mode de régulation de freinage différant du mode de régulation ABS comprenant optionnellement un des modes de régulation suivants :
- une régulation en mode de glissement, et
- un programme de stabilité électronique ou ESP.

11. Système de freinage de véhicule selon l'une des revendications 7 à 10, comprenant en outre :
un deuxième agencement de soupapes (324) qui est conçu pour fonctionner dans au moins un des modes suivants afin de désaccoupler de manière sélective le maître-cylindre (136) d'un côté sortie du générateur de pression hydraulique (316 ; 320) :
- une régulation en mode de glissement, et
- un programme de stabilité électronique ou ESP.

12. Système de freinage de véhicule selon l'une des revendications 1 à 6, ce système de freinage de véhicule ne présentant pas de générateur de pression hydraulique fonctionnant électriquement et prévu en plus du maître-cylindre (136).

13. Système de freinage de véhicule selon la revendication 12, l'actionneur (158) électromécanique pouvant être commandé dans le cadre d'un mode de régulation de freinage qui est différent de l'amplification ou de la production de la pression de freinage lorsqu'est actionnée la pédale de frein, le mode de régulation de freinage comprenant optionnellement le mode de régulation ABS.

14. Système de freinage de véhicule selon la revendication 1, l'agencement de soupapes (268, 272) en supplément du premier agencement de soupapes étant en outre prévu doté d'un réservoir de fluide hydraulique non pressurisé pour permettre l'accouplement sélectif d'au moins une chambre (144, 148) du maître-cylindre (136) dans laquelle est logé le piston (140), l'agencement de soupapes (268, 272) en supplément du premier agencement de soupapes étant conçu afin d'accoupler, en mode de freinage régénératif, ladite chambre (144, 148) du maître-cylindre (136) au réservoir de fluide hydraulique non pressurisé.

15. Procédé d'actionnement d'un système de freinage hydraulique de véhicule (100, 400, 500) comprenant un maître-cylindre (136) doté d'un piston (140) logé de manière mobile dans ce dernier, un actionneur (162) mécanique pouvant être ou étant accouplé à une pédale de frein, destiné à actionner le piston (140), un actionneur (158) électromécanique destiné à actionner le piston (140), un premier agencement de soupapes (300) qui présente pour chaque frein de roue (116) une première soupape (304) destinée à désaccoupler de manière sélective le frein de roue (116) du maître-cylindre (136) et une deuxième soupape (308) destinée à réduire de manière sélective la pression de freinage sur le frein de roue (116), un agencement de soupapes (268, 272) en supplément du premier agencement de soupapes, qui permet la réduction de la pression hydraulique en cas de panne de l'actionneur (158) électromécanique, l'actionneur (158) électromécanique étant commandé au moins pour l'amplification de la force de freinage ou pour la production de la force de freinage lors d'un actionnement de la pédale de frein, le premier agencement de soupapes (300) étant commandé pour le moins dans le cadre d'un mode de régulation ABS, et l'agencement de soupapes (268, 272) supplémentaire pour accoupler de manière sélective, en cas de panne de l'actionneur (158) électromécanique et lorsque la première soupape (304) est ouverte, le frein de roue (116) connexe à un réservoir de fluide hydraulique non pressurisé afin de réduire la pression hydraulique.
